# EUROPÄISCHE PATENTSCHRIFT

(11) **EP 1 243 089 B1**
(45) Veröffentlichungstag und Bekanntmachung des Hinweises auf die Patenterteilung: **31.08.2005**
(21) Anmeldenummer: 00987057.7
(22) Anmeldetag: 31.10.2000
(51) Int. Cl.: H04J 3/06, H04L 7/00, H04L 25/06, H04L 7/033

(54) **SCHALTUNGSANORDNUNG UND VERFAHREN EINER REFERENZTAKTSCHNITTSTELLE**
CIRCUIT AND METHOD OF A REFERENCE CLOCK INTERFACE
CIRCUIT ET PROCEDE APPROPRIE DE PRODUCTION D'UNE INTERFACE D'HORLOGE DE REFERENCE

(30) Priorität: 30.12.1999 DE 19963804
(43) Veröffentlichungstag der Anmeldung: 25.09.2002
(73) Patentinhaber: SIEMENS AKTIENGESELLSCHAFT, 80333 München (DE)
(72) Erfinder: HIPP, Imre, 81375 München (DE)
(86) Internationale Anmeldenummer: PCT/DE2000/003839
(87) Internationale Veröffentlichungsnummer: WO 2001/050656

(56) Entgegenhaltungen:
- EP-A- 0 966 117
- WO-A-99/03241
- DE-A- 19 717 643
- US-A- 4 590 600
- US-A- 5 305 315
- US-A- 5 652 541
- US-A- 5 896 392

## Beschreibung

Taktgeneratoren, insbesondere für Vermittlungsanlagen wurden bisher mit Hilfe von Submodulen aufgebaut. Diese Submodule sind dabei jeweils Referenztakttypenspezifisch ausgestaltet. Jedes Submodul wies dabei nur eine Referenztaktschnittstelle auf. Eine Anpassung an eine Übertragungsfrequenz oder eine Kabelvariante erfolgte bisher durch manuelle Einstellung, eine Festlegung von Alarmschwellen für eine Pegelüberwachung erfolgte durch einmaliges Einstellen vorzugsweise bei der Fertigung der Submodule. Es wird auf die Druckschrift DE-A-19717643 verwiesen.

Der Erfindung liegt die Aufgabe zugrunde, eine weitere Schaltungsanordnung und ein dazugehöriges Verfahren zur Bildung einer Referenztaktschnittstelle anzugeben.

Die Lösung der Aufgabe ergibt sich aus den Merkmalen des Patentanspruches 1 oder 3.

Die Erfindung bringt den Vorteil mit sich, daß eine automatische Anpassung des jeweiligen Referenztakttyps erfolgt.

Die Erfindung bringt den Vorteil mit sich, daß die Schaltungsanordnung von Einstellungen bezüglich der Kabelvariante frei ist.

Die Erfindung bringt den Vorteil mit sich, daß unterschiedliche Eingangssignale erkannt und je Eingangssignal für dieses eine adaptive Schwellwertanpassung zur Abtastung des Eingangssignals gebildet wird.

Die Erfindung bringt den Vorteil mit sich, daß eine Vielzahl von Eingangssignalen wie eine Atomfrequenz, ein PCM24 recovered Signal, ein PCM30 recovered signal oder DS1 bei BITS-Anwendungen ohne weiteren Schaltungsaufwand bzw. ohne spezielle Einstellungen bei der Fertigung als Eingangssignal verwendbar ist.

Die Erfindung bringt den Vorteil mit sich, daß aus dem Eingangssignal mindestens ein erstes Signal zur Ableitung von Pegelinformation und Schwellwerteinstellung für ein zweites Signal, das gleichzeitig als Triggersignal für den Taktgenerator dient, ableitbar wird.

Die Erfindung bringt den Vorteil mit sich, daß sowohl bei binären und ternären Eingangssignaltypen eine kontinuierliche Frequenz- und Kontinuätsüberwachung durchführbar ist.

Die Erfindung bringt den Vorteil mit sich, daß selbständig die Frequenz des Eingangssignals ermittelt und parasitäre Störeffekte wie glitches und dropouts selektiert werden.

Die Erfindung bringt den weiteren Vorteil mit sich, daß mit der Quantisierung gleichzeitig die Jittertoleranz bestimmbar ist, bei der die Selektion der parasitären Störeffekte noch sichergestellt ist.

Weitere Besonderheiten der Erfindung werden aus den nachfolgenden näheren Erläuterungen eines Ausführungsbeispiels anhand von Zeichnungen ersichtlich.

Es zeigen:
- Figur 1: eine Struktur einer Referenztaktschnittstelle,
- Figur 2: eine Maske,
- Figur 3: eine weitere Maske,
- Figur 4: eine Einbindung einer Referenztaktschnittstelle in eine Takterzeugungseinheit,
- Figur 5: ein Blockdiagramm und
- Figur 6: einen Stromlauf.

Erfindungsgemäß wird die Realisierung einer universellen, abgleichfreien Referenztaktschnittstelle, insbesondere für einen Taktgenerator in der Vermittlungstechnik, durch nachfolgend gezeigte Schaltungsanordnung und ein dazugehöriges Verfahren beschrieben.

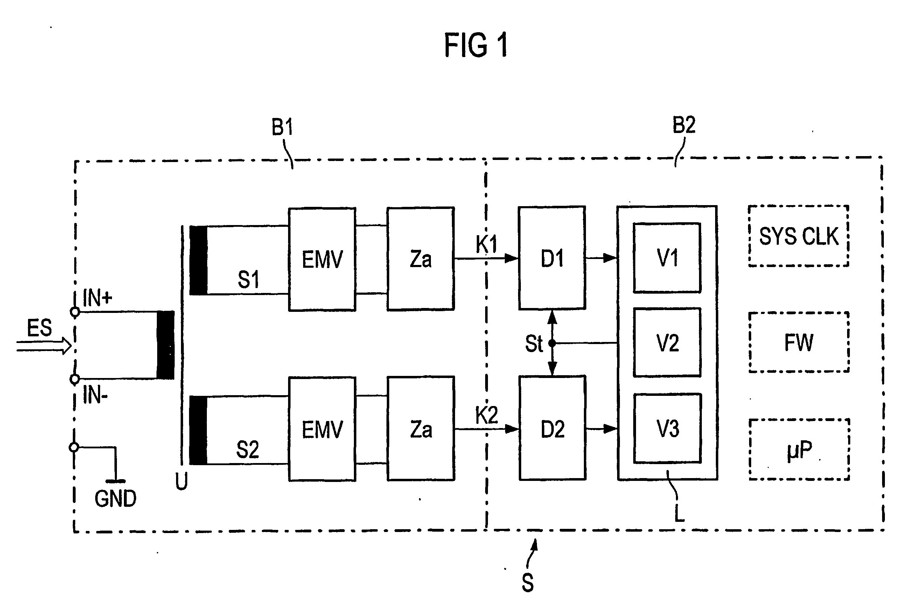

In Figur 1 ist anhand eines Blockdiagrammes eine Struktur einer universellen Referenztaktschnittstelle mit einem Eingang IN+/IN- gezeigt. Dieses Blockdiagramm ist in ein erstes Modul B1 und ein zweites Modul B2 unterteilt.

Im ersten Modul B1, eine "physikalische Schnittstelle", ist ein Übertrager U angeordnet, an dem das an der Primärseite des Übertragers U anliegende Eingangssignal sekundärseitig in ein erstes Signal S1 und ein zweites Signal S2 aufgeteilt wird. Das eingangsseitig am Übertrager U anliegende Signal ES kann beispielsweise ein Referenztaktsignal sein. Mit dem ersten Signal S1 wird ein erster Kanal K1, ein sogenannter "level"Kanal, und mit dem zweiten Signal S2 wird ein zweiter Kanal S2, ein sogenannter "trigger" Kanal, gespeist. Mit dem ersten Signal S1 wird die Pegelinformation (Alarmkriterium) erfaßt, mit den zweiten Signal S2 erfolgt in Abhängigkeit von der gewonnenen Pegelinformation aus dem ersten Signal S1 eine Triggerung bzw. Abtastung des zweiten Signals S2. Auf der Sekundärseite des Übertragers U ist in jedem Kanal ein Überspannungschutz EMV und eine Impedanzanpassung (Za), welche zusammen eine Abschlußimpedanz für die am Eingang IN der Schaltungsanordnung angeschlossenen Leitung bildet.

In dem zweiten Modul B2 sind bezüglich des abzutastenden und individuell bereitzustellenden Referenztaktsignals Einheiten zur Ermittlung der hierfür notwendigen Information vorgesehen. Das zweite Modul B2 kann auch als ein adaptives digitales System bezeichnet werden. Die vom ersten Modul B1 gelieferten Analogsignale auf dem ersten und zweiten Kanal K1, K2 werden jeweils im zweiten Block B2 in den Modulen D1 und D2 separat digitalisiert. In den Modulen D1 und D2 ist eine Art 1Bit-Analog/Digitalwandler mit adaptiv gesteuerter Entscheidungsschwelle angeordnet. Diese Entscheiderschwelle wird mit Steuersignalen incl. Taktsignal von einer programmierbaren Logik L, z.B. einen programmierbaren gate array versorgt. Die programmierbare Logik L ermöglicht eine optimale Erfassung bezüglich Abtastung und Überwachung des am Eingang der Schaltungsanordnung S anliegenden Referenztaktsignals ES. Die aus den Pegelinformationen gewonnenen Kriterien werden mit Hilfe eines in dem zweiten Modul B2 angeordneten Baugruppenprozessors ermittelt. Dieser Baugruppenprozessor ist aus einem Mikroprozessor µP und einem Modul FW gebildet. Ein lokaler Taktgenerator SYS CLK stellt Takt- und Zeitsignale für die Referenztaktschnittstelle zur Verfügung. Das zweite Modul B2 weist ein Logikmodul L auf in dem eine erste Verarbeitungseinheit V1 zur adaptiven Pegelüberwachung, eine zweite Verarbeitungseinheit V2 zur adaptiven Schwellwerteinstellung für das erste Signal und eine dritte Verarbeitungseinheit V3 zur Taktsignalanpassung des Eingangssignal ES integriert sind. In der dritten Verarbeitungseinheit V3 erfolgt eine der Art des Eingangssignals entsprechende Taktsignalaufbereitung.

Um die Referenztaktschnittstelle mit den verschieden standardisierten Kabelvarianten betreiben zu können, wird eine optimierte Eingangsimpedanz (Kabelabschluß) bestimmt. Bei der Bestimmung der Eingangsimpedanz ist darauf zu achten, dass entsprechend der Internationalen Norm ITU-T G.703 für beide existierende Impedanztypen 75 und 120 Ohm eine Reflexionsdämpfung von größer 15dB einzuhalten ist. Daraus abgeleitet läßt sich ein optimaler Eingangswiderstand von annähernd 96 Ohm für beide Impedanztypen bestimmen, damit beträgt für beide Impedanztypen die Reflexionsdämpfung etwa 18dB. Der Eingangswiderstand von 96 Ohm korriliert auch mit der in der amerikanischen Norm (Bellcore GR-499-CORE) definierten Abschluß-Testimpedanz von 100 Ohm ±5% für eine DS1-Pulsmaske in den BITS-Anwendungen.

Es ist besonders vorteilhaft dabei einen breitbandigen Übertrager U zu verwenden. Mit der Verwendung eines breitbandigen Übertragers U kann der Eingangswiderstand in einem weiten Frequenzbereich z.B. von 1..5 (10) MHz gehalten werden. An diese Schaltungsanwendung können alle beispielsweise Eingangsignale von 1MHz (Atomfreq.) , 1544kHz (PCM24 recovered), 2048kHz (PCM30 recovered), 5/10MHz (Atomfreq.) bis zu den 1.5 MB/s-Datensignalen (DS1 bei BITS-Anwendungen) ohne jeglichen zusätzlichen Konfigurationsaufwand angeschlossen werden.

Die Kabelvarianten werden im Kabelstecker durch entsprechende Beschaltung der Eingänge festgelegt. Bei einem symmetrischen 120 Ohm-Kabel werden die beiden Adern an den Eingängen IN+ und IN- angeschlossen. Die Kabelschirmung wird an den GND-Anschluß kontaktiert. Bei Koax-Kabelanwendungen wird die Signalader des Koaxialkabels an IN+ und der Kabelschirm des Koaxialkabels an GND angeschlossen. Die Eingänge IN- und GND werden im Kabelstecker kurzgeschlossen.

Durch die erreichte Kompatibilität sind beide Kabelvarianten an beliebige Referenztakteingänge anschließbar. Aufgrund eines fest realisierten Eingangswiderstandes ist bei der Pegelüberwachung zu beachten, dass der gemessene Pegel wegen der Eingangsimpedanz Rin=95..96 Ohm um etwa 11% bei 75 Ohm-Anwendungen (mit Koax-Kabel) erhöht und bei 120 Ohm-Anwendungen (mit symm.Kabel) reduziert wird.

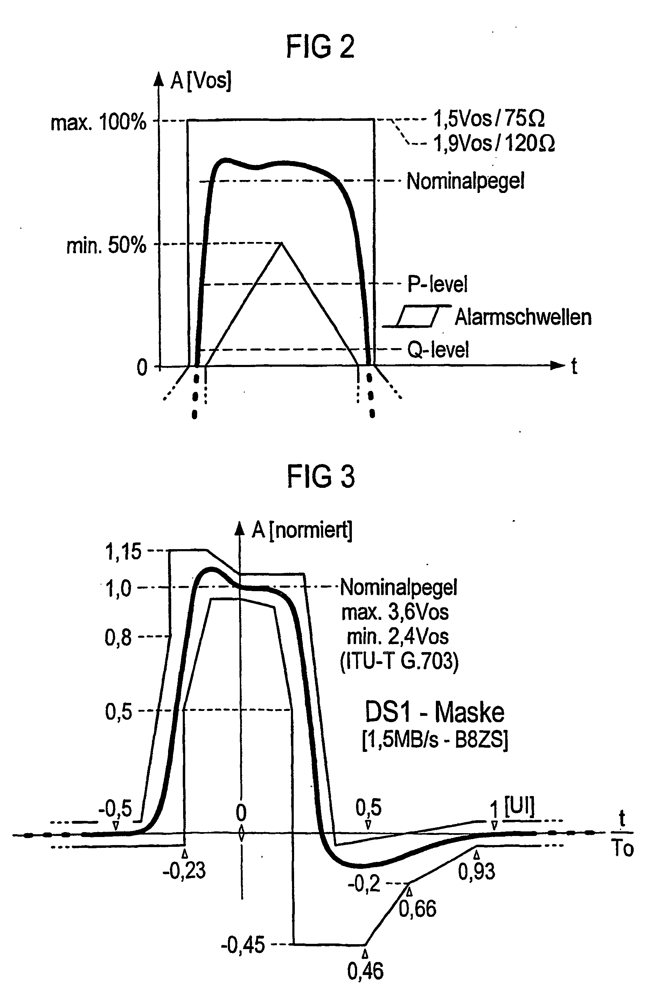

Anhand der in Figur 2 gezeigten Signalmaske wird nach ITU-T G.703 für 2048kHz- und der in Figur 3 gezeigten Signalmaske Bellcore GR-499-CORE für 1,5MB/s-Synchronisierungsignale die Anforderungen an die Digitalisierung und deren Ansteuerung erläutert. Um die beiden in den Figuren 2 und 3 gezeigten Masken miteinander vergleichen zu können, sind jeweils nur die oberen Impulshälften dargestellt.

Die beiden Systeme gemäß ITU-TG.703 und Bellcore GR-499-Core weisen prinzipielle Unterschiede auf. Eine wie in Figur 2 gezeigte Maske (T3-Maske) muß unmittelbar am Ausgang einer Synchronisationsquelle eingehalten werden. Die Maske wurde auf ein Sinussignal oder ein digitales Taktsignal (zweitwertiges Signal) ausgelegt. Für die Pegelüberwachung (Alarmerfassung) werden eine erste Entscheidungsschwelle P und eine zweite Entscheidungsschwelle Q für eine Hysterese definiert. Die zweite Entscheidungsschwelle stellt eine Alarmeinschaltschwelle für einen Pegelausfall dar. Sinkt der Pegel am Referenztakteingang unter die zweite Entscheidungsschwelle ab, wird ein loss of signal Alarm ausgelöst und gleichzeitig die zweite Entscheiderschwelle auf das Potential der ersten Entscheiderschwelle P heraufgesetzt. Hier erfolgt dann bei Wiederkehr des Referenztaktsignals die Rücknahme des Pegelalarms, wobei die Entscheidungsschwelle wieder auf den Q-level heruntergesetzt wird. Zwischen den levels P und Q muß ein ausreichender Abstand (Hysterese) sein, um die Eindeutigkeit der Alarmierung auch bei schwankendem und gestörtem Pegel stets zu gewährleisten. Eine zu große Hysterese setzt den Q-level sehr weit ab. Dadurch werden Referenztaksignale mit zu kleinen Pegeln noch akzeptiert, was nachteilig ist, denn ein zu kleiner Pegel ist störanfällig und verursacht zusätzlich einen erhöhten Jitter bei der Digitalisierung.

Bei einem building integrated time source BITS-System wird die Impulsmaske im Gegensatz zur T3 Maske am Systemeingang DDF (digital distribution frame) kontrolliert, was bedeutet, dass das Verbindungskabel in die Überprüfung mit einbezogen wird. Existierende Systeme werden für Kabeldämpfungen bis zu 6dB ausgelegt. Das Kriterium für einen Pegelausfall wird auf der digitalen Seite durch die Auswertung der Spektraldichte nach Abtastung definiert. Dieses Verfahren setzt eine adaptive Komparator-Schwellenanpassung (ca.50% der momentanen Amplitude) voraus. Die Maske, wie in Figur 3 gezeigt, wurde für ein B8ZS codiertes Datensignal (ternäres Signal) ausgelegt.

In der Tabelle 1 ist eine Zusammenfassung der Alarmkriterien im Vergleich zwischen den beiden oben genannten Signalarten (System) gezeigt. Ergänzend zeigt Tabelle 2 die Normforderung nach ITU-T G.775 bzw. einen konkreten Realisierungsansatz mit diskreten Schwellenwerten für beide Signalarten.

**Tabelle 1 :**

| Alarmkriterien | | | |
|---|---|---|---|
| System | Alarm ein | Alarm aus | Ebene der Auswertung |
| T3 2048 kHz | Unterschreitung des Q-levels Für 5..124µs | Überschreitung des P-levels Für 5..124µs | Analog |
| BITS 1544 kB/s | Signaldensity < 12,5% für 65..162µs | Signaldensity = 12,5% für 65..162µs | Digital |

**Tabelle 2 :**

| Alarmschwellen | | | | | |
|---|---|---|---|---|---|
| System | | Normforderung | Realisierungsansatz | | |
| T3 | P: | = -9 dB¹ | 0,47V | -12,6 dB / Zo=75Ω | -14,8 dB / Zo=120Ω |
| Zo=75/120Ω | Q: | = -35 dB¹ | 0,23V | -20,8 dB / Zo=75Ω | -23,0 dB / Zo=120Ω |
| BITS | | adaptiv: 50% des Amplitudenwertes² | 0dB-Schwelle : | 1,70V ( 4,4V³) | |
| Zo=100Ω | | | -3dB-Schwelle : | 1,15V ( 3,4V³) | |
| | | | -6dB-Schwelle : | 0,85V | |

| | | | | | |
|---|---|---|---|---|---|
| 1)bezogen auf den Nominalpegel | | | | | |
| 2)Die Norm fordert analogseitig keine Überwachung | | | | | |
| 3)Übergang zum nächst niedrigeren Pegelnivaeu | | | | | |

Die Grenzwerte P und Q für T3 ergeben bei 75Ω und 120Ω Kabel unterschiedliche Schwellenwerte, denn bei der Definition wird aus einer einheitlichen Signalleistung ausgegangen. Deshalb die relativen Normangaben dazu. Die im Realisierungsansatz verwendeten festen Schwellenwerte (gleich für beide Impedanzen) liegen gut innerhalb der zugelassenen Grenzen (siehe Vergleich in dB). Bei der Umrechnung wurde die Fehlanpassung mit ±1dB bereits berücksichtigt. Die Hysterese beträgt ca. 240 mV.

Um genügend Sicherheitsabstand zum Störpegel zu erreichen wird auf dem Kanal "level" das Referenzsignal um 1:2 hochtransformiert. Da die Norm die Amplitude in Vos spezifiziert, läßt sich einfach die Alarmschwelle in V mit dem dazugehörigen Pegel in Vss 1:1 vergleichen. Auf dem Kanal "trigger" wird das Referenzsignal 1:1 übertragen und zur Digitalisierungsstufe weitergeleitet. Die Schwelle liegt für T3 Referenzsignale immer bei 0V (Signalmitte).

Die diskreten BITS Grenzwerte hier in diesem Fall: 0dB, -3dB und -6dB (bezogen auf den Nominalpegel) erfüllen erfindungsgemäß in Verbindung mit einer nachgeschalteten Pulsbreitenkontrolle die Voraussetzungen einer optimalen bitfehlerfreien Abtastung der 1,5MB/s-Synchronisierungsignale.

Die Steuerung bei der Schwellwertfestlegung für BITS Anwendungen erfolgt in der Art adaptiv, indem auf dem Kanal "level" zunächst die Amplitude mit dem Schwellenwert 4,4V verglichen wird. Dieser Meßwert entspricht einem Pegel um 2,7dB unter dem Nominalwert von 3,0Vos nach ITU-T G.703. Die dazu gehörige 0dB-Triggerschwelle liegt bei 1,70V (etwa 50% der maximalen Amplitude von 3,6Vos. Reicht der Pegel nicht aus, wird auf den nächst niedrigeren Levelwert von 3,4V umgeschaltet (entspr. -5dB). Dazu gehört die -3dB-Triggerschwelle mit 1,15V (entspr. ca. 50% der 0dB-Grenze mit 4,4V). Reicht der Pegel immer noch nicht aus, wird die Triggerschwelle auf die -6dB-Grenze mit 0,85V herabgesetzt (entspr. exakt 50% der -3dB-Grenze mit 3,4V). Die niedrigste Triggerschwelle entspricht einer analogseitigen Eingangsempfindlichkeit von -11dB (-9dB) bezogen auf den Nominalpegel (min. zulässigen Pegel). Bei einer Optimierung der diskreten Schwellenwerte wurde insbesondere der negative Überschwinger des Referenzsignals berücksichtigt, sodass bei keinem Pegelwert eine Abtastung dieses Signalsegmentes vorkommen kann.

Eine nachgeschaltete Pulsbreitenkontrolle soll konfigurierte Signalsegmente (Vorentzerrung) sowie erhöhte Kabelreflexionen detektieren und ausfiltern.

Mit diesem Verfahren werden beispielsweise bei einem ternären BITS-Signal nur die positiven Impulshälften erfaßt und der Synchronisierung angeboten.

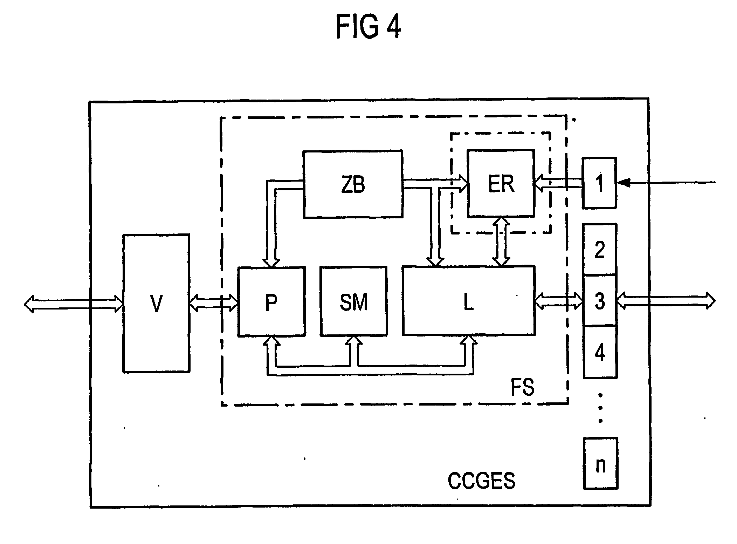

In Figur 4 ist eine Einbindung eines Referenztaktmodules ER in einem zentralen Taktgenerator CCGES gezeigt. In dieser Darstellung sind die mit einem Prozessor P des Taktgenerators verbundenen Module gezeigt. Der Prozessor steht dabei beispielsweise über eine Busverbindung mit dem Logikmodul L und mit einem Speichermodul SM in Verbindung. Eine Zeitbasiseinheit ZB liefert sowohl den Takt für den Prozessor P, das Logikmodul L und dem Referenztaktmodul ER. Das Logikmodul L steht in Verbindung mit einer Vielzahl von Schnittstelleneinheiten 2 bis n. Die erste Schnittstelleneinheit 1 wird anhand der weiteren Figuren näher erläutert und den dazugehörigen Beschreibungen beschriebenen. Bei dieser Schaltungsanordnung wird die gesamte Funktionalität der Schaltungsanordnung vom Logikmodul L, einem programmierbaren Baustein, z.B. ein field programmable gate array (FPGA), in Verbindung mit dem Prozessor P bereitgestellt.

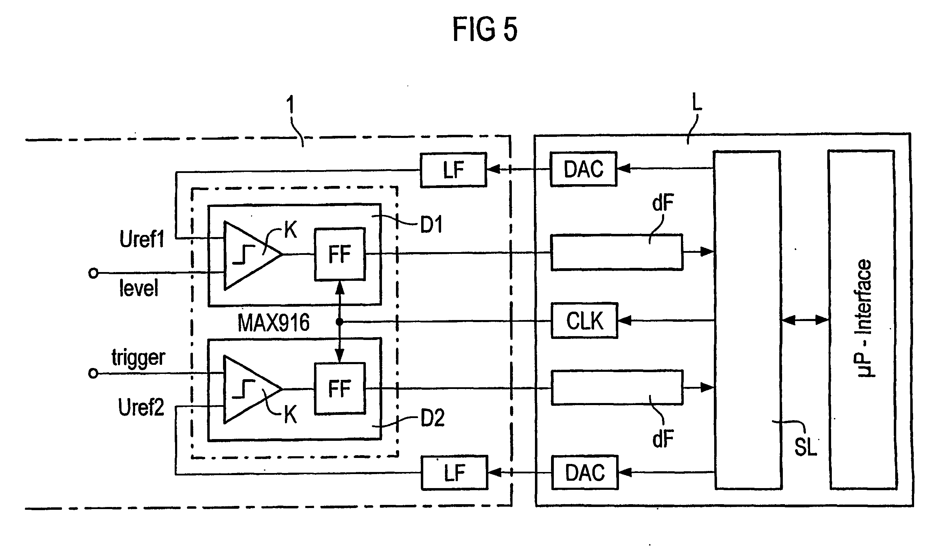

In Figur 5 wird ein Zusammenwirken einer ersten oder zweiten Einheit D1, D2 mit einer diesen nachgeordneten programmierbaren Logik erläutert. Die Schnittstelle zwischen Analog- und Digitalteil der Schaltungsanordnung wird jeweils mit einem Komparator K der beispielsweise in einem Baustein mit der Bezeichnung MAX916 intergiert sein kann gebildet. Dieser Komparator K, ein zweifach 1Bit-Analog/Digitalwandler weist in vorteilhafter Ausgestaltung eine hohe Eingangsempfindlichkeit (ca.2mV) sowie eine hohe Verarbeitungsgeschwindigkeit mit bis zu 50 MS/s zur besseren Verarbeitung der anliegenden analogen Signale auf. Ein erweiterter Eingangsspannungsbereich von ±5V erlaubt eine Anwendung für alle standardisierten Referenztaktsignale. Ein 40MHz-Quantisierungstakt gewährleistet bereits eine sichere Abtastung von Referenzfrequenzen zwischen 1 bis 10MHz.

Die Referenzspannungen Uref_{1,2} für das erste und zweite Signal S1, S2 werden von der programmierbaren Logik L über ein Tiefpassfilter LF geliefert. Das Tiefpassfilters glättet dabei die vom Digital/Analogwandler kommenden Spannungssprünge (Schwellenwert-Umschaltung) sowie die Unterdrückung von Wechselspannungskomponenten wie Störpegel, Ripple etc. Die dynamischen Eigenschaften des Tiefpassfilters LF werden von den Zeitparametern der Alarmkriterien bestimmt. Der Zeitparameter für beispielsweise einen Pegelalarm wurde einheitlich für beide Systeme (T3 und BITS)auf 100µs gesetzt. Um den eingeschwungenen Zustand schnell zu erreichen und gleichzeitig möglichst große Tiefpasswirkung zu erzielen, wird eine kurze Tiefpasszeitkonstante von etwa 5µs gewählt.

Die Digital-Analog Umsetzer DAC sind Teil der programmierbaren Logik L. Beispielhaft können hier, zwei Methoden zur Analogspannungserzeugung zur kontinuierlichen Wertesteuerung über den in der Pulsbreite umgesetzten DC-Inhalt betrachtet werden. Bei einer ersten Methode wird die Werterasterung von der Höhe der Quantisierungsfrequenz bestimmt. Die Vorteile dieser Methode liegen in der erhöhten Flexibilität der adaptiven Schwellensteuerung sowie darin, dass die Ansteuerung des Tiefpassfilters über nur eine Leitung erfolgt. Dadurch werden externe Komponenten, Pins und Platz gespart.

Die zweite im Ausführungsbeispiel realisierte Methode erlaubt eine auf wenige Werte begrenzte diskrete Wertesteuerung über mehrere statische Steuersignale von der programmierbaren Logik. Laut Tabelle 2 werden vorzugsweise drei diskrete Spannungswerte je Kanal (level und trigger) verwendet, um die Funktion der Pegelerfassung für alle Referenztaktsignale zu gewährleisten. Dazu werden zwei Steuersignale mit drei möglichen Logikzuständen (L, H und high Z) benötigt. Vorteilhaft bei dieser Methode ist, dass keine hohe Anforderung betreffend der Dynamik an die programmierbare Logik gestellt werden muss und kein Rest-Ripple die Referenzspannung überlagert.

Die von der Komparatorstufe K gelieferten ersten und zweiten Signale werden einer digitalen Filterung dF unterzogen, um eine korrekte Auswertung der digitalisierten Analogsignale zu ermöglichen. Die erfindungsgemäße Schaltungsanordnung ermittelt selbständig die Frequenz der angeschlossenen Referenztaktsignale und selektiert parasitäre Störeffekte wie beispielsweise glitches und dropouts aus. Durch die Quantisierung wird gleichzeitig die Jittertoleranz bestimmt, bei der die Selektion der parasitären Störeffekte noch sicher funktioniert.

Anhand der Anzahl der 40MHz-Quantisierungstaktperioden pro Referenztaktperiode wird die Eingangsfrequenz gemäß Tabelle 3 überprüft und selektiert.

**Tabelle 3**

| Referenz-freq. | 10 MHz | 5 MHz | 2048 kHz | 1544 kHz | 1 MHz | BITS |
|---|---|---|---|---|---|---|
| Anzahl Min. | 3 | 7 | 18 | 24 | 38 | 48 |
| Anzahl Nom. | 4 | 8 | 19,5 | 25,9 | 40 | 51,8 / 77,7 ¹ |
| Anzahl Max. | 5 | 9 | 21 | 28 | 42 | 84 |
| Frequenz-band | 8,00... 13,333 | 4,444... 5,714 | 1905... 2222 | 1429... 1667 | 0,952... 1,053 | 1429... 1667kB/s |
| Jitter-toleranz | 25ns | 25ns | 37ns | 48ns | 50ns | 144ns |

| | | | | | | |
|---|---|---|---|---|---|---|
| 1) Rahmenlücke im 1,5MB/s "all ones" BITS-Signal | | | | | | |

Eine weitere Funktion der digitalen Filterung dF ist die Kontrolle der Impulsbreite der von der Komparatorstufe kommenden Referenztaktsignale. Eine Spikeunterdrückung erfolgt auf dem Triggerkanal und die richtige Einphasung auf oberen Impulshälften der BITS-Signale bei vorhandenen Reflexionen auf der Kabelverbindung zur Referenztaktschnittstelle.

Die Steuerlogik SL des Logikbausteins L führt die adaptive Schwellensteuerung der Komparatorstufe K über das µP-Interface aus, indem sie der Komparatorstufe Steuersignale zur Erzeugung der Referenzspannungen zur Verfügung stellt. Ferner wird der Quantisierungstakt unter Berücksichtigung der Laufzeitverhältnisse der I/O-Zellen phasenangepaßt vom Taktblock CLK angeboten.

Die Weitergabe der digital gefilterten Referenztaktsignale (Kanal "trigger") und die Pegel-Meßsignale auf dem ersten Kanal "level" an das µP-Interface erfolgt ebenso über die Steuerlogik SL.

Das µP-Interface stellt die Verbindung zwischen der programmierbaren Logik L und dem Baugruppenprozessor µP und FW, wie in Figur 1 gezeigt her. Alle zeitunkritischen mathematischen Operationen und Zeitmessungen werden vom µP selber durchgeführt. Darunter gehören die Ermittlung der Alarmkriterien sowie die Kodierung zur adaptiven Schwellensteuerung.

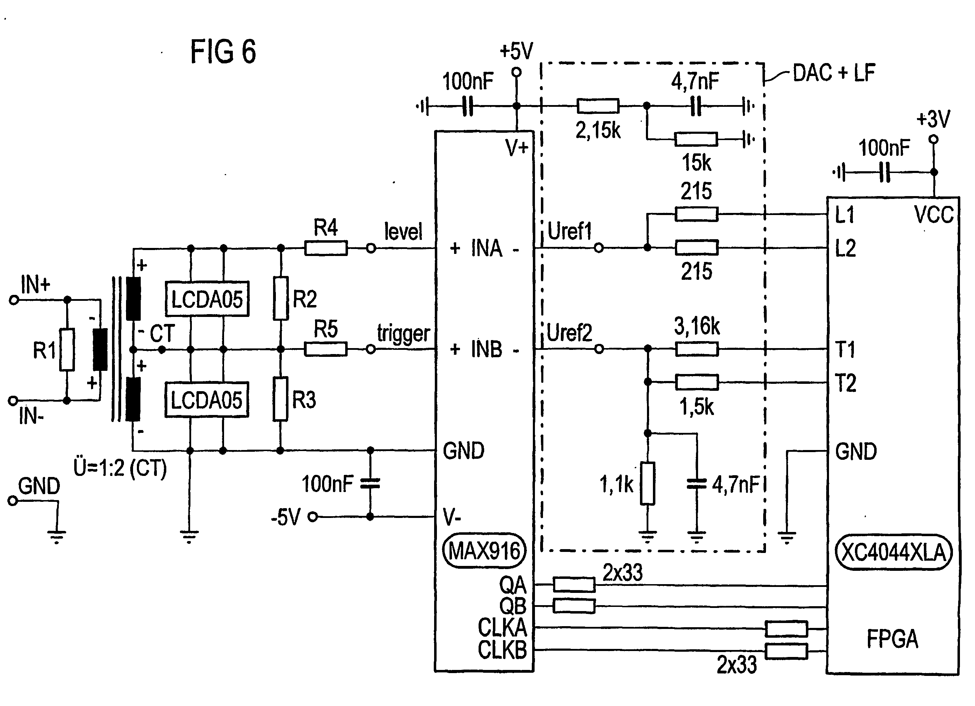

Die universelle Referenztaktschnittstelle beinhaltet in dieser Ausgestaltung vier identisch aufgebaute Kanäle entsprechend dem in Figur 6 gezeigten Stromlauf. Gemeinsam ist lediglich für alle vier Kanäle der programmierbare gate array, z.B. FPGA:XC4044XLA, welcher außer der Schnittstellenfunktionen sämtliche zeitkritische HW-Komponenten des zentralen Taktgenerators CCGES in sich vereint.

An den Steuerausgängen L1,2 und T1,2 ist ein einfacher DAC (digital/analog Wandler) inclusive Tiefpass-filter (LF) bestehend aus RC-Komponenten angeschlossen. Die Tiefpasswirkung an den Ausgängen Uref1 und Uref2 wegen der Ansteuerung mit 3-wertigem Kode ist variabel. Die kodeabhängigen Zeitkonstanten liegen angepaßt an die Normforderungen im Bereich von 0,5...10µs. Anhand der Tabelle 4 wird die Kodierung mit der Zuordnung zu den diversen Schwellenwerten gezeigt.

**Tabelle 4 :**

| Kodierung der im Figur 6 realisierten Schwellensteuerung | | | | | | | |
|---|---|---|---|---|---|---|---|
| System | Bezeichnung | Level-Komparator | | | Trigger-Komparator | | |
| T3 | | L1 | L2 | U_{ref1} | T1 | T2 | U_{ref2} |
| | P | L | Z | 0,47V | L | L | 0V |
| | Q | L | L | 0, 23V | L | L | 0V |
| BITS | 0dB | Z | Z | 4,4V | H | H | 1,70V |
| | -3dB | H | H | 3,4V | L | H | 1,15V |
| | -6dB | - | - | - | H | Z | 0,85V |

Der Komparator K wird mit ±5V Versorgungsspannung betrieben. Die digitalen Ein- und Ausgänge (CLK_{A,B} und Q_{A,B}) arbeiten mit TTL-Pegel, so das eine direkte Anbindung an das erste Modul in LV-CMOS mit 3,3V ist ohne Pegeladaption möglich ist. Lediglich werden die Verbindungsleitungen mittels Widerständen beispielsweise 33 Ohm seriell HF-mäßig angepasst. Die hochohmigen Analogeingänge des MAX916 (level und trigger) werden gegen Überspannungsspitzen durch die Widerstände R4, R5 zu je 330 Ohm Widerstand geschützt, da die internen Klemmdioden nur begrenzte Stromspitzen zulassen.

Die zwei Widerstände R2, R3 beispielsweise 215 Ohm zusammen mit einem Widerstand R1 beispielsweise 1 kOhm (direkt am Eingang) realisieren die optimale Impedanzanpassung (Za, Bild 1) der Referenztakteingänge für 95..96 Ohm. Die beiden LCDA05 Bausteine von der Fa. Semtech sorgen für ausreichenden Überspannungschutz (ESD, EFT) mit Hilfe von integrierten Supressor-Dioden (TVS-Array). Durch die Integration von seriellen Schottky-Dioden in diesem Chip wird eine sehr niedrige Lastkapazität erreicht, was die HF-Eigenschaften der Referenztakteingänge wesentlich verbessert.

Der letzte Baustein ist der Schnittstellenübertrager T1068 der Fa. Pulse. Dieser 8-Fach Ringkern-übertrager in SMD Aufbautechnik ist speziell für die 1,5MB/s und 2MB/s Datenrate entwickelt worden. Er beinhaltet vier Übertrager mit ü=1:1 (CT) und vier mit ü=1:2 (CT). Durch die hervorragenden HF-Eigenschaften bis etwa 5MHz sind die vier hochtransformierenden Übertrager für den Einsatz in den Referenztakteingängen bestens geiegnet. Die Funktion kann bis 10MHz ausgeweitet werden, wobei eine Verschlechterung der Eingangsreflexion um bis zu 6dB in Kauf genommen werden muß.

## Patentansprüche

1. Schaltungsanordnung zur Erzeugung von mindestens einem Referenztakt mit
einem ersten Modul (B1) zur Bildung einer physikalischen Schnittstelle, wobei mindestens ein erstes und zweites Signal aus einem am Eingang des ersten Moduls (B1) anliegenden Eingangssignals (ES) gebildet wird,
einem zweiten Modul (B2) zur Überwachung des ersten Signals sowie zur Ermittlung von Anpassungsparametern für eine Abtastung des zweiten Signals,
**dadurch gekennzeichnet,**
**dass** das erste Modul (B1) einen Übertrager (U) aufweist, durch den das an seiner Primärwicklung anliegende Eingangssignal (ES) auf der Sekundärseite in das erste und zweite Signal aufgeteilt wird,
**dass** das zweite Modul (B2) eine erste Verarbeitungseinheit (V1) zur adaptiven Pegelüberwachung, eine zweite Verarbeitungseinheit (V2) zur adaptiven Schwellwerteinstellung für das erste Signal und eine dritte Verarbeitungseinheit (V3) zur Taktsignalanpassung des Eingangssignal aufweist.

2. Schaltungsanordnung nach Anspruch 1,
**dadurch gekennzeichnet,**
**dass** mit der dritten Verarbeitungseinheit (V3) eine der Art des Eingangssignals entsprechende Taktsignalaufbereitung erfolgt.

3. Verfahren zur Erzeugung von mindestens einem Referenztakt mit den Verfahrensschritten,
dass in einem ersten Modul eine physikalische Schnittstelle gebildet wird, wobei mindestens ein erstes und zweites Signal aus einem am Eingang des ersten Moduls anliegenden Eingangssignals gebildet wird,
dass in einem zweiten Modul (B2) das erste Signal überwacht wird sowie die Anpassungsparameter für eine optimale Abtastung des zweiten Signals ermittelt werden,
**dadurch gekennzeichnet,**
**dass** in dem ersten Modul (B1) aus dem Eingangssignal ein erstes und zweites Signal gebildet wird,
**dass** in dem zweite Modul (B2) eine adaptiven Pegelüberwachung des Eingangssignals durchgeführt wird,
**dass** eine adaptive Schwellwerteinstellung für das erste Signal durchgeführt wird und
**dass** eine Taktsignalanpassung des Eingangssignal durchgeführt wird.

4. Verfahren nach Anspruch 3,
**dadurch gekennzeichnet,**
**dass** entsprechend der Art des Eingangssignals eine entsprechende Taktsignalaufbereitung erfolgt.

## Claims

1. Circuit for generating at least one reference clock, having
a first module (B1) for forming a physical interface, with at least one first and second signal being formed from an input signal (ES) present at the input of the first module (B1),
a second module (B2) for monitoring the first signal and for determining compensation parameters for a sampling of the second signal,
**characterized in that** the first module (B1) has a transformer (U) by means of which the input signal (ES) present at its primary winding is divided on the secondary side into the first and second signal, and **in that** the second module (B2) has a first processing unit (V1) for adaptive level monitoring, a second processing unit (V2) for adaptive threshold setting for the first signal, and a third processing unit (V3) for clock signal adaption of the input signal.

2. Circuit according to Claim 1, **characterized in that** a clock signal conditioning corresponding to the type of input signal is performed by the third processing unit (V3) .

3. Method for generating at least one reference clock, having the method steps
that a physical interface is formed in a first module, with at least one first and second signal being formed from an input signal present at the input of the first module,
that the first signal is monitored and the compensation parameters for an optimal sampling of the second signal are determined in a second module (B2),
**characterized in that** a first and second signal is formed from the input signal in the first module (B1), **in that** an adaptive level monitoring of the input signal is performed in the second module (B2), **in that** an adaptive threshold setting for the first signal is performed, and **in that** a clock signal adaption of the input signal is performed.

4. Method according to Claim 3, **characterized in that** a corresponding clock signal conditioning is performed depending on the type of input signal.

## Revendications

1. Circuit pour produire au moins une horloge de référence, comprenant
un premier module (B1) pour constituer une interface physique, au moins un premier et un deuxième signal étant constitués à partir d'un signal d'entrée (ES) appliqué à l'entrée du premier module (B1),
un deuxième module (B2) pour surveiller le premier signal ainsi que pour déterminer des paramètres d'adaptation pour un échantillonnage du deuxième signal,
**caractérisé en ce que**
le premier module (B1) comporte un transformateur (U) par lequel le signal d'entrée (ES) appliqué à son enroulement primaire est réparti, côté secondaire, en les premier et deuxième signaux,
le deuxième module (B2) comporte une première unité de traitement (V1) pour la surveillance adaptative de niveau, une deuxième unité de traitement (V2) pour le réglage adaptatif de valeur seuil pour le premier signal et une troisième unité de traitement (V3) pour l'adaptation du signal de rythme du signal d'entrée.

2. Circuit selon la revendication 1,
**caractérisé en ce**
**qu'**a lieu, avec la troisième unité de traitement (V3), une régénération du signal de rythme correspondant au type du signal d'entrée.

3. Procédé pour produire au moins un rythme de référence, comprenant les étapes suivantes:
une interface physique est constituée dans un premier module, au moins un premier et un deuxième signal étant constitués à partir d'un signal d'entrée appliqué à l'entrée du premier module,
dans un deuxième module (B2), il est procédé à la surveillance du premier signal et à la détermination des paramètres d'adaptation pour un échantillonnage optimal du deuxième signal,
**caractérisé en ce que**
un premier et un deuxième signaux sont constitués dans le premier module (B1) à partir du signal d'entrée,
une surveillance adaptative de niveau du signal d'entrée est opérée dans le deuxième module (B2),
un réglage adaptatif de valeur seuil est effectué pour le premier signal et
une adaptation du signal de rythme du signal d'entrée est effectuée.

4. Procédé selon la revendication 3,
**caractérisé en ce**
**qu'**a lieu une régénération du signal de rythme correspondant au type du signal d'entrée.
